# EUROPÄISCHE PATENTSCHRIFT

(11) **EP 1 603 975 B1**
(45) Veröffentlichungstag und Bekanntmachung des Hinweises auf die Patenterteilung: **11.04.2007**
(21) Anmeldenummer: 04717584.9
(22) Anmeldetag: 05.03.2004
(51) Int. Cl.: C08L 69/00

(54) **ZUSAMMENSETZUNG AUF BASIS VON POLYCARBONATEN**
COMPOSITION BASED ON POLYCARBONATES
COMPOSITION BASE DE POLYCARBONATES

(30) Priorität: 10.03.2003 DE 10310284
(43) Veröffentlichungstag der Anmeldung: 14.12.2005
(73) Patentinhaber: Bayer MaterialScience AG, 51368 Leverkusen (DE)
(72) Erfinder: MOETHRATH, Melanie, 40227 Düsseldorf (DE); ERKELENZ, Michael, 47239 Duisburg (DE); HORN, Klaus, 41539 Dormagen (DE)
(86) Internationale Anmeldenummer: PCT/EP2004/002275
(87) Internationale Veröffentlichungsnummer: WO 2004/081112

(56) Entgegenhaltungen:
- DE-A- 10 105 714
- DE-A- 10 135 465

## Beschreibung

Gegenstand der vorliegenden Erfindung ist die Verwendung schlagzäher modifizierter Polycarbonate mit besonders guten Tieftemperatureigenschaften und besonders gutem ESC-Verhalten, für Anwendungen, in denen besonders gute Tieftemperatureigenschaften und besonders gutes ESC-Verhalten gefragt sind, z.B. für den Automobilbau oder Außenanwendungen, diese neuen modifizierten Polycarbonat-Zusammensetzungen selbst sowie Formkörper und Extrudate aus diesen modifizierten Polycarbonat-Zusammensetzungen. '

Für den Automobilbau und andere Außenanwendungen werden seit langem möglichst chemikalienresistente und vorzugsweise transparente Polycarbonate gesucht, die einerseits tieftemperaturbeständig sind, andererseits eine hohe Thermostabilität aufweisen.

Es wurden nun bereits Copolycarbonate auf Basis von 4,4'-Dihydroxydiphenyl und 2,2-Bis(4-hydroxyphenyl)propan aus JP-A 5117382 bekannt und in EP-A 10 544 407, US-A 5 470 938, US-A 5 532 324 und US-A 5 401 826 als besonders chemikalienresistent, hitzebeständig und schwer entflammbar beschrieben, bei, im Vergleich zu handelsüblichem Polycarbonat aus reinem Bisphenol, gleichen mechanischen Eigenschaften und Transparenz.

In DE-A 10 047 483 werden Copolycarbonate aus 4,4'-Dihydroxydiphenyl und 2,2-Bis(4-hydroxyphenyl)propan (Bisphenol A) beschrieben, die besonders gute Tieftemperatureigenschaften aufweisen.

DE-A 10 135 465 beschreibt Blends aus Copolycarbonaten aus 4,4'-Dihydroxydiphenyl und 2,2-Bis(4-hydroxyphenyl)propan (Bisphenol A) und Polycarbonat aus reinem 2,2-Bis(4-hydroxyphenyl)propan mit gegenüber Bisphenol-A-Polycarbonaten deutlich verbesserten Tieftemperatureigenschaften.

In DE-A 10 105 714 werden Blends aus Copolycarbonaten aus 4,4'-Dihydroxydiphenyl und 2,2-Bis(4-hydroxyphenyl)propan (Bisphenol A) mit ABS-Propfpolymerisaten beschrieben, die ein besonders gutes ESC-Verhalten und Tieftemperaturverhalten aufweisen. Diese Blends besitzen aber durch den ABS-Anteil eine gegenüber dem reinen Copolycarbonat verschlechterte Thermostabilität, Wärmeformbeständigkeit und verschlechterte Bewitterungseigenschaften (Vernetzung des ABS-Polymerisats unter UV-Licht-Betrahlung).

Die Aufgabe bestand also darin, das ESC-Verhalten von Copolycarbonaten aus 4,4'-Dihydroxydiphenyl und 2,2-Bis(4-hydroxyphenyl)propan (Bisphenol A) unter Erhalt der besonders guten Tieftemperatureigenschaften und unter weitgehendem Erhalt der für Copolycarbonate aus 4,4'-Dihydroxydiphenyl und 2,2-Bis(4-hydroxyphenyl)-propan (Bisphenol A) bekannten Thermostabilität, Wäremeformbeständigkeit und Bewitterungseigenschaften zu verbessern.

Es wurde nun überraschenderweise gefunden, dass Copolycarbonate, die bestimmte Dihydroxydiaryle wie 4,4'-Dihydroxydiphenyl als Comonomere neben Bisphenol A enthalten, mit geringen Einsatzmengen, bezogen auf die Menge des Endprodukts, an Poly-Butyl-Acrylat-Core-Shell-Modifikatoren oder Olefinmodifikatoren oder mit Poly-(Styrol-b-Ethylen-co-Butylen-b-Styrol)-Modifikatoren oder Silicon-Acryl-Kautschuk-Modifikatoren modifiziert werden können, um ein gegenüber reinen Copolycarbonaten aus 4,4'-Dihydroxydiphenyl und 2,2-Bis(4-hydroxyphenyl)propan (Bisphenol A) verbessertes ESC-Verhalten bei weiterhin guten Tieftemperatureigenschaften und weiterhin guter Thermostabilität und Wärmeformbeständigkeit zu erreichen.

Dies ist insbesondere erstaunlich, als man bei der Herstellung von modifizierten Polycarbonaten im allgemeinen keine Voraussagen treffen kann, welche Eigenschaften ein modifiziertes Polycarbonat schlussendlich aufweisen wird. Die Eigenschaften des Ausgangspolymers und des Modifikators können sich verstärken, auslöschen, verändern (in jeder Richtung), u.U. können das Ausgangspolymer und der Modifikator gar nicht homogen mischbar sein etc. Kurz gesagt, es ist keine Vorhersage möglich und ein Ergebnis wie das vorliegende ist in keiner Weise naheliegend, sondern im Gegenteil höchst überraschend.

Die vorliegende Erfindung betrifft daher Zusammensetzungen, enthaltend (A) 89 bis 99 Gew.% Copolycarbonat, das aus 0,1 mol % bis 46 mol %, vorzugsweise aus 11 mol % bis 34 mol % und insbesondere aus 26 mol % bis 34 mol % Verbindungen der Formel (I), 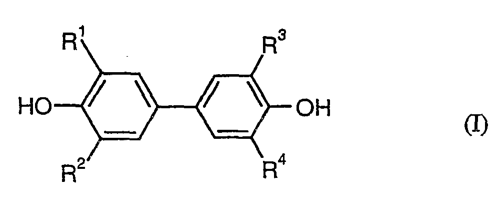 worin R¹ bis R⁴ unabhängig voneinander für H, C₁-C₄-Alkyl, Phenyl, substituiertes Phenyl oder Halogen stehen, bevorzugt für H, C₁-C₄-Alkyl oder Halogen stehen und besonders bevorzugt alle für den gleichen Rest, insbesondere für H oder tert.-Butyl stehen, und komplementären Mengen, also 99,9 mol % bis 54 mol %, vorzugsweise 89 mol % bis 66 mol % und insbesondere 74 mol % bis 66 mol % an Verbindungen der Formel (II) 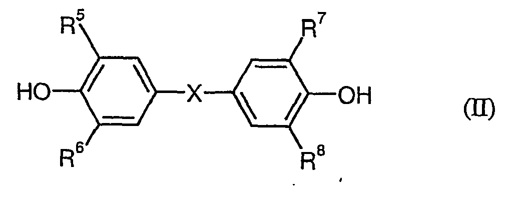 worin R⁵ - R⁸ unabhängig voneinander H, CH₃, Cl oder Br sind und X C₁-C₅-Alkylen, C₂-C₅-Alkyliden, C₅-C₆-Cycloalkylen, C₅-C₁₀-Cycloalkyliden ist, als Bisphenol-Monomere aufgebaut ist, und (B) 11 - 1 Gew.% Modifikatoren, ausgewählt aus der Gruppe der Poly-Butyl-Acrylat-Core-Shell-Modifikatoren, Olefinmodifikatoren, Poly-(Styrol-b-Ethylen-co-Butylen-b-Styrol)-Modifikatoren, Kautschukpropfpolymerisate mit mindestens einem Vinyl-Monomer Propfpolymerisat bzw. Mischungen aus zwei oder mehreren dieser Modifikatoren. Bevorzugte Mischungen des Copolymers (A) mit dem jeweiligen Modifikator (B) sind 91 bis 99 Gew.% (A), ganz besonders bevorzugt 93 bis 99 Gew.% (A) mit entsprechend komplementären Mengen Modifikator (B).

Ebenfalls Gegenstand der vorliegenden Erfindung ist die Verwendung der erfindungsgemäßen Zusammensetzungen als Werkstoffe in Bereichen, in denen besonders gutes ESC-Verhalten und Tieftemperatureigenschaften, Wärmeformbeständigkeit und Thermostabilität gefragt sind.

Unter den für die erfindungsgemäßen Polycarbonat-Zusammensetzungen geeigneten Modifikatoren (B) versteht man (B1) Poly-Butyl-Acrylat-Core-Shell-Modifikatoren wie beispielsweise beschrieben in US 3,562,235 (Spalte 1, Zeile 28 - Spalte 4, Zeile 72), US 3,808,180 (Spalte 3, Zeile 21- Spalte 10, Zeile 55) oder US 3,859,389 (Spalte 2, Zeile 58 - Spalte 5, Zeile 15 und Spalte 5, Zeile 35 - Spalte 6, Zeile 54), (B2) Olefinpolymere aus der Gruppe der Polyethylene, Polypropylene und Copolymere von Propen und Ethen, wie allesamt in US 3,431,224, Spalte 2, Zeile 48-72, sowie Spalte 3, Zeile 1 - 7 beschrieben, (B3) Poly-(Styrol-b-Ethylen-co-Butylen-b-Styrol)-Modifikatoren mit einer Zugfestigkeit nach ASTM-D412 größer 20 MPa, kleiner 50 MPa und einem 300 % igem Modul, ASTM-D412, zwischen 1 und 10 MPa, einer Bruchdehnung von 400 bis 1500 % (ASTM-D412), einer Härte nach ASTM-D2240 von 30 bis 100 Shore A, einer Dichte von 0,85 bis 1,0 g/m³ und einem Styrol-Gehalt von 12 bis 35 Gew % oder (B4) Kautschukpfropfpolymerisate erhältlich durch Pfropfpolymerisation von mindestens einem Vinyl-Monomer auf einen Kautschuk bestehend aus 10 bis 90 Gew. % eines Polyorganosilankautschuks und 10 bis 90 Gew. % eines Polyalkyl(meth)acrylat-Kautschuks in einer Gesamtmenge von 100 Gew. % in einer "inseperable Interlocking fashion" und einer durchschnittlichen Partikelgröße von 0,08 bis 0,6 µm, wie in US 4,888,388 (Spalte 3, Zeile 68 - Spalte 7, Zeile 6) beschrieben, oder eine Mischung (B5) einer unter (B4) beschriebenen Pfropfcopolymerisatkautschuk-Verbindung mit einem Vinyl-Monomer ebenfalls wie in US 4,888,388 (Spalte 7, Zeile 7 - Spalte 7, Zeile 65) beschrieben.

Bevorzugte Modifikatoren dieser Verbindungsklassen sind Paraloid EXL 2300^{®} und 3300^{®} (Rohm & Haas), Verbindungen der Kraton G ^{®}-Serie (Shell), Metablene der S-Serie^{®} (Mitsubishi Rayon) und Polypropylene (Novolen Technology Holdings C.V.).

Besonders bevorzugte Modifikatoren dieser Verbindungsklassen sind Paraloid EXL 2300^{®} (Rohm & Haas), Kraton G 1651^{®} (Shell), Metablen S2001^{®} (Mitsubishi Rayon) und Novolen 1100 L (Novolen Technology Holdings C.V.).

Ganz besonders bevorzugt sind Kraton G 1651^{®}, Metablen S2001^{®} und Novolen 1100 L^{®}.

Als Pfropfpolymerisate B kommen vorzugsweise solche mit Kern-Schale-Struktur zum Einsatz. Bevorzugte Pfropfgrundlagen B.11 sind beispielsweise Acrylat- und Silikon-Acrylat-Kompositkautschuke.

Die Pfropfgrundlagen haben im Allgemeinen eine mittlere Teilchengröße (d₅₀-Wert) von 0,01 bis 5 µm, vorzugsweise 0,05 bis 2 µm, insbesondere 0,1 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Der Gelanteil der Pfropfgrundlagen beträgt mindestens 30 Gew.-%, vorzugsweise mindestens 40 Gew.-% (in Toluol gemessen).

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Besonders bevorzugt als Pfropfgrundlage B.11 sind für die Pfropfpolymere mit Kern-Schale-Struktur C solche Acrylatkautschuke oder Silikonacrylatkompositkautschuke geeignet, die 0 bis 100 Gew.-%, bevorzugt 1 bis 99 Gew.-%; insbesondere 10 bis 99 Gew.-%, besonders bevorzugt 30 bis 99 Gew.-% Polyorganosiloxan-Komponente und 100 bis 0 Gew.-%, bevorzugt 99 bis 1 Gew.-%, insbesondere 90 bis 1 Gew.-%, besonders bevorzugt 70 bis 1 Gew.-% Polyalkyl(meth)acrylat-Kautschuk-Komponente (die Gesamtmenge der jeweiligen Kautschukkomponente ergibt 100 Gew.-%) enthalten.

Als bevorzugte Silikonacrylatkautschuke kommen solche zum Einsatz, deren Herstellung in der JP 08 259 791-A, JP 07 316 409-A und EP-A 0 315 035 beschrieben werden. Die diesbezüglichen Inhalte dieser Anmeldungen werden hiermit in diese Anmeldung übernommen..

Die Polyorganosiloxan-Komponente im Silikonacrylat-Kompositkautschuk kann durch Umsetzung eines Organosiloxans und eines multifunktionalen Vernetzungsmittels in einem Emulsionspolymerisationsprozess hergestellt werden. Es ist weiterhin möglich, über Zusatz geeigneter ungesättigter Organosiloxane pfropfaktive Stellen in den Kautschuk einzufügen.

Das Organosiloxan ist im Allgemeinen cyclisch, wobei die Ringstrukturen bevorzugt 3 bis 6 Si-Atome enthalten. Beispielhaft seien genannt Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan, Octaaphenylcyclotetrasiloxan, welche allein oder in Mischung von 2 oder mehr Verbindungen eingesetzt werden können. Die Organosiloxankomponente sollte am Aufbau des Silikonanteils im Silikonacrylatkautschuk zu mindestens 50 Gew.-%, bevorzugt mindestens 70 Gew.-% bezogen auf den Silikonanteil im Silikonacrylatkautschuk beteiligt sein.

Als Vernetzungsmittel werden im Allgemeinen 3- oder 4-funktionelle Silanverbindungen eingesetzt. Beispielhaft hierfür seien als besonders bevorzugt genannt: Trimethoxymethylsilan, Triethoxyphenylsilan, Tetramethoxysilan, Tetraethoxysilan, Tetra-n-propoxysilan, Tetrabutoxysilan. 4 funktionelle Verzweigungsmittel, insbesondere Tetraethoxysilan. Die Menge an Verzweigungsmittel beträgt im Allgemeinen 0 bis 30 Gew.-% (bezogen auf die Polyorganosiloxankomponente im Silikonacrylatkautschuk).

Zum Einbringen pfropfaktiver Stellen in die Polyorganosiloxankomponente des Silikonacrylatkautschuks kommen bevorzugt Verbindungen zum Einsatz, die eine der folgenden Strukturen bilden:

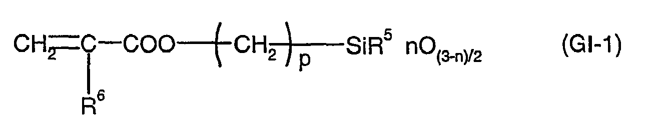

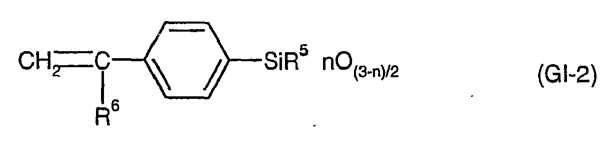

CH₂=CH-SiR⁵ nO_{(3-n)/2} (GI-3)

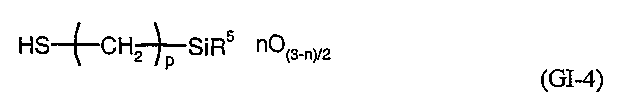

wobei
- R⁵: Methyl, Ethyl, Propyl oder Phenyl,
- R⁶: Wasserstoff oder Methyl,
- n: 0, 1 oder 2 und
- p: eine Zahl von 1 bis 6
bedeuten.

(Meth)acryloyloxysilan ist eine bevorzugte Verbindung zur Bildung der Struktur (GI 1). Bevorzugte (Meth)acryloyloxysilane sind beispielsweise β-Methacryloyloxyethyl-dimethoxy-methyl-silan, γ-Methacryloyl-oxy-propylmethoxy-dimethyl-silan, γ-Methacryloyloxypropyl-dimethoxy-methyl-silan, γ-Methacryloyloxypropyl-trimethoxy-silan, γ-Methacryloyloxy-propyl-ethoxy-diethyl-silan, γ-Methacryloyloxypropyldiethoxy-methyl-silan, γ-Methacryloyloxy-butyl-diethoxy-methyl-silan.

Vinylsiloxane, insbesondere Tetramethyl-tetravinyl-cyclotetrasiloxan sind fähig die Struktur GI-2 zu bilden.

Beispielsweise p-Vinylphenyl-dimethoxy-methylsilan kann Struktur GI-3 bilden. γ-Mercaptöpropyldimethoxy-methylsilan, γ-Mercaptopropylmethoxy-dimethylsilan, γ-mercaptopropyldiethoxymethylsilan usw. können Struktur (GI-4) bilden.

Die Menge an diesen Verbindungen beträgt 0 bis 10, vorzugsweise 0,5 bis 5 Gew.-% (bezogen auf die Polyorganosiloxankomponente).

Die Acrylat-Komponente (Pfropfgrundlage) kann aus Alkyl(meth)acrylaten, Vernetzungsmitteln und pfropfaktiven Monomereinheiten, letztere insbesondere im Falle von Silikonacrylat-Kompositkautschuken, hergestellt werden.

Als Alkyl(meth)acrylate seien beispielhaft und bevorzugt genannt Alkylacrylate wie Methylacrylat, Ethylacrylat, n-Propylacrylat, n-Butylacrylat, 2-Ethylhexylacrylat und Alkylmethacrylate wie Hexylmethacrylat, 2-Ethylhexylmethacrylat, n-Laurylmethacrylat und in besonders bevorzugter Weise n-Butylacrylat.

Als Vernetzungsmittel kommen multifunktionelle Verbindungen zum Einsatz. Es seien beispielhaft hierfür genannt: Ethylenglycoldimethacrylat, Propylenglycoldimethacrylat, 1,3-Butylenglycoldimethacrylat und 1,4-Butylenglykoldimethacrylat.

Zum Einfügen pfropfaktiver Stellen kommen beispielsweise folgende Verbindungen, allein oder in Mischung, zum Einsatz: Allylmethacrylat, Triallylcyanurat, Triallylisocyanurat, Allylmethacrylat. Allylinethacrylat kann auch als Vernetzungsmittel fungieren. Diese Verbindungen werden in Mengen von 0,1 bis 20 Gew.-%, bezogen auf die Acrylatkautschuk-Komponente im Silikonacrylat-Kompositkautschuk eingesetzt.

Methoden zur Herstellung der bevorzugt in den erfindungsgemäßen Zusammensetzungen eingesetzten Silikonacrylatkompositkautschuke sowie dessen Pfropfung mit Monomeren werden beispielsweise beschrieben in US-A 4 888 388, JP 08 259 791 A2, JP 07 316 409A und EP-A 0 315 035. Als Pfropfgrundlage C.1 für das Pfropfpolymer C kommen sowohl solche Silikonacrylat-Kompositkautschuke in Frage, deren Silikon- und Acrylatkomponenten eine Kern-Schale-Struktur bilden, als auch solche, die ein Netzwerk bilden, in denen Acrylat- und Silikonkomponente völlig miteinander durchdrungen sind ("interpenetrating network").

Die Pfropfpolymerisation auf die zuvor beschriebenen Pfropfgrundlagen kann in Suspension, Dispersion oder Emulsion durchgeführt werden. Bevorzugt ist die kontinuierliche oder diskontinuierliche Emulsionspolymerisation. Diese Pfropfpolymerisation wird mit Radikalinitiatoren durchgeführt (z.B. Peroxiden, Azoverbindungen, Hydroperoxiden, Persulfaten, Perphosphaten) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Pfropfmonomeren wird an den Kautschuk chemisch gebunden.

Die Pfropfhülle C.2 wird aus (Meth)Acrylsäure-(C₁-C₈)-Alkylester, vorzugsweise Methylmethacrylat, n-Butylacrylat und/oder t-Butylacrylat, gebildet.

Besonders bevorzugt besteht die Pfropfhülle aus einem oder einer Mischung mehrerer reiner (Meth)Acrylsäure-(C₁-C₈)-Alkylester, insbesondere aus reinem Methylmethacrylat.

Besonders bevorzugt sind mit Methylmethacrylat gepfropfter Butylacrylatkautschuk oder ein mit Methylmethacrylat gepfropfter Silikon-Butylacrylat-Kompositkautschuk.

Als Modifikator (B) kann prinzipiell auch eine Mischung von zwei oder mehr der zuvor als geeignete Verbindungen beschriebenen Modifikatoren (B) eingesetzt werden.

Ganz besonders bevorzugt und selbst Erfindungsgegenstand sind Mischungen aus Modifikatoren (B) mit Copolycarbonaten (A), wobei die Copolycarbonate (A) aus 34-26 mol %, speziell 33-27 mol %, insbesondere 32-28 mol %, ganz speziell 31-29 mol % und besonders herausgehoben 30 mol % an Bisphenol-Monomer der Formel (I) aufgebaut sind, jeweils durch einen komplementären Gehalt an Bisphenol-Monomer der Formel (II) ergänzt.

Die Prozentangaben der Bisphenol-Monomere beziehen sich auf den auf 100 % definierten Gesamtgehalt der Polycarbonate an Bisphenolen. Ein reines Bisphenol A Polycarbonat bestünde dann aus 100 % Bisphenol A. Der Carbonatanteil aus Kohlensäureestern oder - Halogeniden wird dabei nicht mit berücksichtigt.

Bevorzugt, besonders bevorzugt oder ganz besonders bevorzugt sind Zusammensetzungen, welche die unter bevorzugt, besonders bevorzugt oder ganz besonders bevorzugt genannten Zusammensetzungen aufweisen.

Die in der Beschreibung aufgeführten allgemeinen oder in Vorzugsbereichen aufgeführten Definitionen, Mengenverhältnisse bzw. Erläuterungen können jedoch auch untereinander, also zwischen den jeweiligen Bereichen und Vorzugsbereichen beliebig kombiniert werden. Sie gelten für die Endprodukte sowie für die Vor- und Zwischenprodukte entsprechend.

Es hat sich nun überraschenderweise gezeigt, dass die erfindungsgemäßen Polycarbonat-Zusammensetzungen ein gegenüber Copolycarbonaten aus 4,4'-Dihydroxydiphenyl und 2,2-Bis(4-hydroxyphenyl)propan (Bisphenol A) verbessertes ESC-Verhalten bei weiterhin guten Tieftemperatureigenschaften und guter Thermostabilität und Wärmeformbeständigkeit aufweisen.

Die modifizierten Copolycarbonate sind daher als Formkörper überall dort einsetzbar, wo die bislang bekannten Polycarbonate in ihrem Eigenschaftsbild nicht ausreichend sind, insbesondere z.B. im Elektrosektor, im Sicherheitsbekleidungssektor, insbesondere für Schutzhelme und Visiere, sowie im Bausektor, für Abdeckungen oder Verglasungen, insbesondere im Kraftfahrzeugbereich als Folien, Platten, Armaturenteile oder Gehäuseteile, aber auch im optischen Bereich als Linsen und Datenspeicher sowie als Gebrauchsartikel, und zwar dann, wenn erhöhte Wärmeform- oder Chemikalienbeständigkeit bei gleichzeitig guten Tieftemperatureigenschaften verlangt werden. Daneben können sie auch in solchen Anwendungen andere Werkstoffe ersetzen, in denen gewöhnliche Polycarbonate bisher auf Grund ihrer dafür nicht ausreichenden Tieftemperatureigenschaften nicht eingesetzt werden konnten.

Unter guten Tieftemperatureigenschaften ist erfindungsgemäß beispielhaft aber nicht einschränkend eine gute Tieftemperaturzähigkeit zu verstehen, da gewöhnliche Polycarbonate bei tiefen Temperaturen spröde werden, und damit zum Brechen und Reißen neigen.

Unter tiefen Temperaturen sind erfindungsgemäß Temperaturen unterhalb 0°C, besonders bevorzugt unterhalb -10°C, ganz besonders bevorzugt unterhalb -20°C, insbesondere bevorzugt unterhalb -30°C und hervorgehoben unterhalb -40°C.

Unter gutem ESC-Verhalten ist erfindungsgemäß beispielhaft aber nicht einschränkend eine gute Chemikalienbeständigkeit unter Last nach DIN 53449/3 (Biegestreifentest) nach einstündiger Lagerung bei 22°C in i-Octan/ Toluol 1/1 zu verstehen. '

Unter guter Thermostabilität ist erfindungsgemäß beispielhaft aber nicht einschränkend die Stabilität gemäß Farbe und Schlagzähigkeit der erfindungsgemäßen Zusammensetzungen bei einer Verarbeitungstemperaturen der Materialien oberhalb von 290°C, bevorzugt oberhalb von 300°C zu verstehen.

Unter guter Wärmeformbeständigkeit ist erfindungsgemäß beispielhaft aber nicht einschränkend eine Formbeständigkeit der Materialien oberhalb von 140°C, bevorzugt oberhalb von 150°C zu verstehen.

Bevorzugte Verbindungen der Formel (I) sind 4,4'-Dihydroxydiphenyl (DOD) und 4,4'-Dihydroxy-3,3',5,5'tetra(tert.-butyl)diphenyl, 4,4'-Dihydroxy-3,3',5,5'tetra(n-butyl)diphenyl und 4,4'-Dihydroxy-3,3',5,5'tetra(methyl)diphenyl, besonders bevorzugt ist 4,4'- Dihydroxydiphenyl.

Bevorzugte Verbindungen der Formel (II) sind 2,2-Bis(4-hydroxyphenyl)propan, 1,1-Bis(4-hydroxyphenyl)-3,3,5-trimethylcyclohexan und 1,3-Bis[2-(4-hydroxyphenyl)-2-propyl]benzol, 1,1-Bis(4-hydroxyphenyl)-1-phenylethan, 1,1-Bis(4-hydroxyphenyl)-cyclohexan, insbesondere 2,2-Bis(4-hydroxyphenyl)propan (Bisphenol A) und 1,1-Bis(4-hydroxyphenyl)-3,3,5-trimethylcyclohexan (Bisphenol TMC), ganz besonders bevorzugt 2,2-Bis(4-hydroxyphenyl)propan (Bisphenol A).

Das Copolycarbonat (A) kann sowohl eine Verbindung der Formel (I) als auch mehrere Verbindungen der Formel (I) enthalten.

Ebenso kann (A) sowohl eine Verbindung der Formel (II) als auch mehrere Verbindungen der Formel (II) enthalten.

Die Herstellung von (Co-)Polycarbonaten ist in der Literatur allgemein bekannt.

Zur Herstellung von Polycarbonaten nach dem Phasengrenzflächen- oder dem Schmelzeumsterungsverfahren sei beispielhaft auf "Schnell", Chemistry and Physics of Polycarbonates, Polymer Reviews, Vol. 9, Interscience Publishers, New York, London, Sydney 1964, S. 33 ff. und auf Polymer Reviews, Volume 10, "Condensation Polymers by Interfacial and Solution Methods", Paul W. Morgan, Interscience Publishers, New York 1965, Kap. VIII, S. 325 und EP-A 971790 verwiesen.

Gemäß DE-A 2 119 779 erfolgt die Herstellung von Copolycarbonaten unter Beteiligung von Monomeren der Formel (I) vorzugsweise in Lösung, und zwar nach dem Phasengrenzflächenverfahren und dem Verfahren in homogener Phase. Daneben ist deren Herstellung auch nach dem bekannten Polycarbonatherstellungsverfahren in der Schmelze (sogenanntes Schmelzeumesterungsverfahren) möglich, das z.B. in DE-A 1 96 46 401 oder in DE-A 42 38 123 beschrieben ist. Daneben werden Umesterungsverfahren (Acetatverfahren und Phenylesterverfahren) beispielsweise in den US-A 3 494 885, 4 386 186, 4 661 580, 4 680 371, und 4 680 372, in den EP-A 26 120, 26 121, 26 684, 28 030, 39 845, 91 602, 97 970, 79 075, 146 887, 156 103, 234 913 und 240 301 sowie in den DE-A 1495 626 und 2 232 977 beschrieben.

Die erfindungsgemäßen Modifikatoren (B) stammen bevorzugt aus kommerziellen Quellen, oder werden gemäß den oben zitierten Patentschriften hergestellt.

Das Polymer (A) und der Modifikator (B) können eventuell synthesebedingt Verunreinigungen enthalten. Eine hohe Reinheit ist aber wünschenswert und anzustreben, daher werden sie mit der höchst möglichen Reinheit für die Herstellung der modifizierten Copolycarbonate eingesetzt.

Die erfindungsgemäßen modifizierten Copolycarbonate können verschiedene Endgruppen enthalten. Diese werden durch Kettenabbrecher eingeführt. Kettenabbrecher im Sinne der Erfindung sind solche der Formel (III) 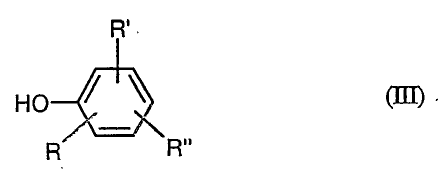 wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können, beispielsweise Butylphenol, Tritylphenol, Cumylphenol, Phenol, Octylphenol, bevorzugt Butylphenol oder Phenol. Dabei kann das Copolycarbonat (A) sowohl die gleiche als auch eine andere Endgruppe als das Bisphenol A-Polycarbonat (B) enthalten.

Das Co-Polycarbonat (A) kann geringe Mengen von 0,02 bis 3,6 mol % (bezogen auf die Dihydroxyverbindung) an Verzweigern enthalten. Geeignete Verzweiger sind die für die Polycarbonatherstellung geeigneten Verbindungen mit drei und mehr funktionellen Gruppen, vorzugsweise solche mit drei oder mehr als drei phenolischen OH-Gruppen, beispielsweise 1,1,1-Tri-(4-hydroxyphenyl)ethan und Isatinbiskresol.

Zur Änderung der Eigenschaften können den erfindungsgemäßen Zusammensetzungen Hilfs- und Verstärkungsstoffe zugemischt werden. Als solche sind u. a. in Betracht zu ziehen: Thermo- und UV-Stabilisatoren, Fließhilfsmittel, Entformungsmittel, Flammschutzmittel, Pigmente, fein zerteilte Mineralien, Faserstoffe, z.B.

Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z.B. in WO 99/55772, S. 15 - 25, und in "Plastics Additives", R. Gächter und H. Müller, Hanser Publishers 1983, beschrieben.

Weiterhin können den erfindungsmäßen modifizierten Copolycarbonate auch andere Polymere zugemischt werden, z. B. andere Polycarbonate, Polyolefine, Polyurethane, Polyester und Polystyrol.

Bevorzugt kann den erfindungsmäßen modifizierten Copolycarbonaten Bisphenol-A-Polycarbonat zugemischt werden. Besonders bevorzugt kann den erfindungsmäßen modifizierten Copolycarbonaten Makrolon 3108 zugemischt werden.

Es werden bevorzugt bis zu 10 Gew. % Makrolon 3108 bezogen auf die erfindungsgemäßen modifizierten Copolycarbonaten, besonders bevorzugt bis zu 5 Gew.% eingesetzt.

Makrolon 3108 ist ein unverzweigtes Homopolycarbonat auf Bisphenol A Basis mit einer mittleren Molmasse von M_{w} von 31000 g mol⁻¹.

Der Zusatz dieser Stoffe erfolgt vorzugsweise auf herkömmlichen Aggregaten zum fertigen Polycarbonat, kann jedoch, je nach den Erfordernissen, auch auf einer anderen Stufe des Herstellverfahrens erfolgen.

Das verwendete Co-Polycarbonat (A) kann Molekulargewichte zwischen Mw (gewichtsgemitteltes Molekulargewicht) 10.000 bis 60.000 aufweisen, bevorzugt Mw 20.000 bis 55.000, ermittelt durch Messung der relativen Lösungsviskosität in Dichlormethan oder in . Mischungen gleicher Gewichtsmengen Phenol/o-Dichlorbenzol, geeicht durch Lichtstreuung. Es kann bereits Additive oder Stabilisatoren enthalten, wie sie auch den erfindungsgemäßen Blends zugemischt werden können.

Die erfindungsgemäßen modifizierten Copolycarbonate selbst sind ebenfalls Gegenstand der vorliegenden Anmeldung.

Die erfindungsgemäßen modifizierten Copolycarbonate sind bei Temperaturen von 240°C bis 380°C, vorzugsweise 260°C bis 360°C in üblicher Weise thermoplastisch verarbeitbar. Durch Spritzguss oder via Extrusion können beliebige Formkörper und Folien in bekannter Weise hergestellt werden. Formkörper und Extrudate aus den erfindungsgemäßen modifizierten Copolycarbonate sind ebenfalls Gegenstand der vorliegenden Anmeldung.

Die erfindungsgemäßen modifizierten Copolycarbonate sind in Lösungsmitteln wie chlorierten Kohlenwasserstoffen, z.B. Methylenchlorid, gut löslich und können somit beispielsweise in bekannter Weise zu Gießfolien verarbeitet werden.

Die Kombination von Eigenschaften wie Wärmeformbeständigkeit, Thermostabilität, gute Tieftemperatureigenschaften und Chemikalienbeständigkeit ermöglicht einen breiten Einsatz der erfindungsgemäßen modifizierten Copolycarbonate. Als mögliche Anwendungen der erfindungsgemäßen Blends seien hier beispielhaft aber keineswegs einschränkend,
1. Sicherheitsscheiben, die bekanntlich in vielen Bereichen von Gebäuden, Fahrzeugen und Flugzeugen, sowie als Schilde von Helmen erforderlich sind,
2. Herstellung von Folien, insbesondere Skifolien,
3. Herstellung von Blaskörpern (siehe beispielsweise US-Patent 2 964 794), beispielsweise 1 bis 5 Gallon Wasserflaschen,
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen,
5. Herstellung optischer Datenspeicher, .
6. Zur Herstellung von Ampelgehäusen oder Verkehrsschildern,
7. Zur Herstellung von Schaumstoffen (siehe beispielsweise DE-B 1 031 507),
8. Zur Herstellung von Fäden und Drähten (siehe beispielsweise DE-B 1 137 167 und DE-A 1 785 137),
9. Als transluzente Kunststoffe mit einem Gehalt an Glasfasern für lichttechnische Zwecke (siehe beispielsweise DE-A 1 554 020),
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreunenden Formteilen,
11. Zur Herstellung von Präzisionsspritzgußteilchen, wie beispielsweise Linsenhalterungen, hierzu verwendet man Polycarbonate mit einem Gehalt an Glasfasern, die gegebenenfalls zusätzlich etwa 1-10 Gew.-% MoS₂, bezogen auf Gesamtgewicht, enthalten,
12. Zur Herstellung optischer Geräteteile, insbesondere Linsen für Foto- und Filmkameras (siehe beispielsweise DE-A 2 701 173),
13. Als Lichtübertragungsträger, insbesondere als Lichtleiterkabel (siehe beispielsweise EP-A10 089 801), '
14. Als Elektroisolierstoffe für elektrische Leiter und für Steckergehäuse sowie Steckverbinder,
15. Herstellung von Mobiltelefongehäusen mit verbesserter Beständigkeit gegenüber Parfüm, Rasierwasser und Hautschweiß,
16. Network interface devices,
17. Als Trägermaterial für organische Fotoleiter,
18. Zur Herstellung von Leuchten, z. B. Scheinwerferlampen, als sogenannte "head-lamps", Streulichtscheiben oder innere Linsen,
19. Für medizinische Anwendungen, z.B. Oxygenatoren, Dialysatoren,
20. Für Lebensmittelanwendungen, wie z.B. Flaschen, Geschirr und Schokoladenformen,
21. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken,
22. Für Sportartikel, wie z. B. Slalomstangen oder Skischuhschnallen,
23. Für Haushaltsartikel, wie z. B. Küchenspülen und Briefkastengehäuse,
24. Für Gehäuse, wie z. B. Elektroverteilerschränke,
25. Gehäuse für Elektrozahnbürsten und Föngehäuse,
26. Transparente Waschmaschinen - Bullaugen mit verbesserter Beständigkeit gegenüber der Waschlösung,
27. Schutzbrillen, optische Korrekturbrillen,
28. Lampenabdeckungen für Kücheneinrichtungen mit verbesserter Beständigkeit gegenüber Küchendunst, insbesondere Öldämpfen,
29. Verpackungsfolien für Arzneimittel,
30. Chip-Boxen und Chip-Träger,
31. Sicherheitsbekleidung wie Schutzhelme und Visiere,
32. Für sonstige Anwendungen, wie z. B. Stallmasttüren oder Tierkäfige,
genannt.

Besonders geeignet sind die erfindungsgemäßen Zusammensetzungen jeweils unabhängig voneinander für die Verwendung in Sicherheitsbekleidung, in optischen Anwendungen, in medizinischen und Lebensmittelanwendungen, in Folien, im Automobilbereich, in Außenanwendungen und im Elektrobereich.

Insbesondere können aus den erfindungsgemäßen hochmolekularen, aromatischen, modifizierten Copolycarbonaten Folien hergestellt werden. Die Folien haben bevorzugte Dicken zwischen 1 und 1500 µm, insbesondere bevorzugte Dicken zwischen 10 und 900 µm.

Die erhaltenen Folien können in an sich bekannter Weise monoaxial oder biaxial gereckt werden, bevorzugt im Verhältnis 1 : 1,5 bis 1 : 5.

Die Folien können nach den bekannten Verfahren zur Folienerzeugung hergestellt werden, z.B. durch Extrusion einer Polymerschmelze durch eine Breitschlitzdüse, durch Blasen auf einer Folienblasmaschine, durch Tiefziehen oder Gießen. Dabei ist es möglich, dass die Folien für sich allein verwendet werden. Man kann mit ihnen natürlich auch nach den herkömmlichen Verfahren Verbundfolien mit anderen Kunststoff-Folien herstellen, wobei prinzipiell, je nach gewünschter Anwendung und Endeigenschaft der Verbundfolie, alle bekannten Folien als Partner in Frage kommen. Es kann ein Verbund aus zwei oder mehr Folien erzeugt werden.

Daneben können die erfindungsgemäßen modifizierten Copolycarbonate auch in anderen Schichtsystemen Anwendung finden, wie z.B. in coextrudierten Platten.

Die nachfolgenden Beispiele sollen die vorliegende Erfindung illustrieren, ohne sie jedoch einzuschränken:

### Beispiele

Die eingesetzten Polycarbonate wurden nach den bekannten Herstellverfahren in der Schmelze, wie beispielsweise in DE-A 42 38 123 beschrieben, und über die Phasengrenzfläche, wie zum Beispiel in "Schnell", Chemistry and Physics of Polycarbonates, Polymer Reviews, Vol. 9, Interscience Publishers, New York, London, Sydney 1964, S. 33 ff. beschrieben, synthetisiert.

In Beispiel 1 wurde als Copolycarbonat (A) wurde ein Polycarbonat mit 30 mol % Dihydroxydiphenyl (DOD) und 70 mol % Bisphenol A hergestellt. Als Kettenabbrecher wurde tert-Butylphenol verwendet. Das Granulat weist eine relative Lösungsviskosität von 1,30 und ein mittlere Molmasse M_{w} von 20 000 g mol⁻¹ auf.

Als Modifikatoren (B) wurden die kommerziell erhältlichen Verbindungen Paraloid^{®} EXL 2300 (ein mit Methylmethacrylat gepfropfter Butylacrylatkautschuk), Kraton^{®} G 1651, Metablen^{®} S2001 (ein mit Methylmethacrylat gepfropftes Silikon-Butylacrylat-Kompositkautschuk) und Novolen^{®} 1100 L eingesetzt. '

Bei Beispiel 2 - 7 wurde zusätzlich ein Bisphenol A-Polycarbonat mit einem Molekulargewicht von 31 000 g mol⁻¹, ausgedrückt in der relativen Lösungsviskosität (eta rel) von 1,31, verwendet.

Im Vergleichsbeispiel 1 wurde ein Copolycarbonat mit 30 mol % Dihydroxydiphenyl (DOD) und 70 mol % Bisphenol A hergestellt. Das Granulat weist eine relative Lösungsviskosität von 1,30 auf.

Im Vergleichsbeispiel 2 wurde ein Bisphenol A-Polycarbonat mit einem Molekulargewicht von 31 000 g mol⁻¹, ausgedrückt in der relativen Lösungsviskosität (eta rel) von 1,31, verwendet.

Im Vergleichsbeispiel 3 (DE-A 101 05 714) wurden 70 mol% eines Copolycarbonats, mit 30 mol % Dihydroxydiphenyl (DOD) und 70 mol % Bisphenol A mit Mw von 25620 g mol⁻¹, mit 13 mol% eines Propfpolymerisats, von 40 Gew.% eines Copolymerisats aus Styrol und Acrylnitril im Verhältnis 73:27 auf 60 Gew.%-Teile teilchenförmig vernetzten Polybutadien-Kautschuk (d₅₀=0,28 µm) hergestellt durch Emulsionspolymerisation, und mit 17 mol% Styrol/Acrylnitril Copolymerisat mit einem Styrol/Acrylnitril -Verhältnis von 72:28 und einer Grenzviskosität von 0,55 dl/g gemessen in Dimethylformamid bei 20°C, geblendet.

Die relative Lösungsviskosität wurde in Dichlormethan bei einer Konzentration von 5 g/l bei 25°C bestimmt.

Zur Ermittlung der Schlagzähigkeit wurde der Schlagbiegeversuch nach ISO 180/4A verwendet. Dabei wurden jeweils zehn Prüfkörper vermessen. In der Tabelle 1 ist der Wert angegeben, den die Mehrzahl der Prüfkörper aufwies.

Zur Ermittlung des ESC-Verhaltens wird die Chemikalienbeständigkeit unter Last nach DIN 53449/3 (Biegestreifentest) in Isooctan/ Toluol 1/1 durchgeführt.

Die Thermostabilität der Proben wird bei 290 und 300°C gemessen. Es werden Musterplättchen in verschiedenen Temperaturen im Spritzguss hergestellt und diese dann optisch beurteilt.

Die Compoundierung zum Blend erfolgte auf einer ZSK 32 (Zweischneckenextruder, Werner & Pfleiderer, Stuttgart) bei 300°C und einem Durchsatz von 10 kg/h.

Die Zusammensetzung ist in Tabelle 1 gezeigt, die Angaben sind in Gew. % der Zusammensetzung.

**Tabelle 1 (Angaben in Gew. % der Zusammensetzung)**

| **Beispiel** | **1** | **2** | **3** | **4** | **5** | **6** | **Vergleich 1** | **Vergleich 2** |
|---|---|---|---|---|---|---|---|---|
| Komponente A | 95 | 92 | 87 | 95 | 92 | 95 | 100 | - |
| BPA-PC | - | 3 | 3 | 3 | 3 | - | - | 100 |
| Paraloid EXL 2300 | 5 | - | - | - | - | - | - | - |
| Kraton G1651 | - | 5 | 10 | - | - | - | - | - |
| Novolen 1100L | - | - | - | 2 | 5 | - | - | - |
| Metablen S2001 | - | - | - | - | - | 5 | - | - |

**Tabelle 2**

| Ergebnisse der Tieftemperaturzähigkeit und der Chemikalienbeständiglceit unter Last | | | | | | | | | |
|---|---|---|---|---|---|---|---|---|---|
| Beispiel | Biegestreifentest | Biegestreifentest | Biegestreifentest | Kerbschlagzähigkeit nach ISO 180/4A [kJ/m²] | | | | | |
| | 0% | 0,6 % | 1,0 % | 0°C | -20 °C | -30 °C | - 40°C | - 50°C | -60°C |
| Bsp. 1 | ng | 5 ng | 46s | - | 47z | 44z | 8x37z, 2x25s | - | - |
| Bsp. 2 | ng | 3 x ng, 90z | 74z | - | 41z | - | 41z | 10x20s | - |
| Bsp.3 | ng | Ng | 81z | - | 36z | - | 34z | 10x19s | - |
| Bsp. 4 | ng | 3 x ng, 73z | 54*s | - | 54z | - | 54z | 52z | 5x43z, 5x30s |
| Bsp. 5 | ng | 4 x 84z | 54z | - | 43z | - | 37z | 7x34z, 3x29s | - |
| Bsp. 6 | ng | 2 x ng, 65z | 35*s | - | 43z | - | 38z | 36z | 5x35z, 5x28s |
| Vergl. Bsp. 1 | ng | 8s | 7s | - | 54z | - | - | 51z | 47z |
| Vergl. Bsp. 2. | ng | 8s | 8s | 95z | z/s | 15s | - | - | - |

| | | | | | | | | | |
|---|---|---|---|---|---|---|---|---|---|
| ng : nicht gebrochen, z: zäh, s: Sprödbruch *Kantenrisse **Querrisse "5ng": 5 Proben mit dem Ergebnis "ng" = nicht gebrochen "3 x ng, 90 z" bedeutet: 4 Proben gemessen, 3 Proben mit dem Ergebnis "ng", 1 Probe mit einer Kerbschlagzähigkeit von 90 kJ/m² (Kerbschlagzähigkeit), z = zäh | | | | | | | | | |

Aus Tabelle 2 ist deutlich zu erkennen, dass die modifizierten Polycarbonate überraschenderweise gegenüber den in den Vergleichsbeispielen genannten unmodifizierten Polycarbonaten eine deutlich verbesserte Chemikalienbeständigkeit zeigen. Das heißt, dass sie im Biegestreifentest unter Randfaserdehnung nicht oder erst unter deutlich größerer Krafteinwirkung als bei den unmodifizierten Polycarbonaten brechen. Ein Großteil der modifizierten Proben (Bsp. 2, 3, 5) zeigen überraschenderweise sogar bei 1,0 %iger Randfaserdehnung ein zähes Verhalten. Die Vergleichsbeispiele dagegen lassen unter Randfaserdehnung bei geringster Belastung unerwünschtes sprödes Bruchverhalten erkennen. Ebenso auffällig ist, dass trotz der guten Chemikalienbeständigkeit der Zäh-Spröd-Übergang der Kerbschlagzähigkeit der modifizierten Proben bei Temperaturen von -40 und -50°C, bei den Beispielproben 4 und 6 sogar erst bei -60°C stattfindet. Vergleichsbeispiel 1 zeigt zwar einen Zäh-Spröd-Übergang unterhalb von -60°C, hat jedoch eine dramatisch schlechtere Chemikalienbeständigkeit.

**Tabelle 3: Ergebnisse zur Thermostabilität**

| Beispiele | 1 | 2 | 3 | 4 | 5 | 6 | Vgl. Bsp. 3 |
|---|---|---|---|---|---|---|---|
| 290°C¹⁾ | 1 | 1 | 1 | 1 | 1 | 1 | 3 |
| 300°C¹⁾ | 1 | 1 | 1 | 1 | 1 | 1 | 2 |

| | | | | | | | |
|---|---|---|---|---|---|---|---|
| 1) Spritzgusstemperatur Die Thermostabilität wird visuell beurteilt (Bewertung: 1,2, 3): | | | | | | | |

Je größer die Zahl, desto stärker geschädigt ist die Probe und zeigt entsprechend Defekte an der Oberfläche. Die Zahl 1 bedeutet keine Oberflächendefekte bzw. Schlierenbildung, 2 kleine Oberflächendefekte bzw. Schlierenbildung. Die Zahl 3 bedeutet starke Oberflächendefekte bzw. Schlierenbildung. Es ist zu erkennen, dass sämtliche erfindungsgemäßen Formmassen eine bessere Thermostabilität als das Vergleichsbeispiel 3 aufweisen.

Somit belegen die Beispiele klar die überraschende Überlegenheit der erfindungsgemäßen modifizierten Polycarbonate, welche eine deutlich überlegene Chemikalienbeständigkeit bei gleichzeitiger guten Tieftemperatureigenschaften und Wärmeformbeständigkeit aufweisen.

## Patentansprüche

1. Zusammensetzungen, enthaltend 89 bis 99 Gew.% Copolycarbonat (A), das aus 0, mol % bis 46 mol %, vorzugsweise aus 11 mol % bis 34 mol % und insbesondere aus 26 mol % bis 34 mol % Verbindungen der Formel (1), 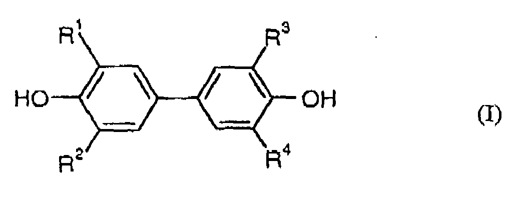 worin R¹ bis R⁴ unabhängig voneinander für H, C₁-C₄-Alkyl, Phenyl, substituiertes Phenyl oder Halogen stehen, bevorzugt für H, C₁-C₄-Alkyl oder Halogen stehen und besonders bevorzugt alle für den gleichen Rest, insbesondere für H oder tert.-Butyl stehen, und komplementären Mengen, also 99,9 mol % bis 54 mol %, vorzugsweise 89 mol % bis 66 mol % und insbesondere 74 mol % bis 66 mol % an Verbindungen der Formel (II) 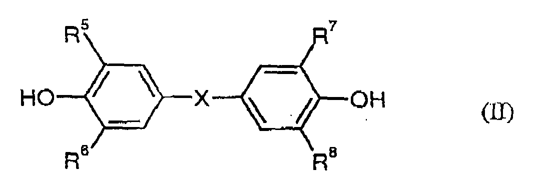 worin R⁵ - R⁸ unabhängig voneinander H, CH₃, Cl oder Br sind und X C₁-C₅-Alkylen, C₂-C₅-Alkyliden, C₅-C₆-Cycloalkylen, C₅-C₁₀-Cycloalkyliden ist, als Bisphenol-Monomere aufgebaut ist, und 11 - 1 Gew.% Modifikatoren (B), ausgewählt aus der Gruppe der Poly-Butyl-Acrylat-Core-Shell-Modifikatoren, Polypropylen, Poly-(Styrol-b-Ethlen-co-Butylen-b-Styrol)-Modifikatoren, ein mit Methylmethacrylat gepfropfter Butylacrylatkautschuk oder ein mit Methylmethacrylat gepfropfter Silikon-Butylacrylat-Kompositkautschuk bzw. Mischungen aus zwei oder mehreren dieser Modifikatoren.

2. Zusammensetzungen gemäß Anspruch 1, **dadurch gekennzeichnet, dass** (A) aus 34-26 mol % an Bisphenol-Monomer der Formel (I), sowie einem komplementären Gehalt an Bisphenol-Monomer der Formel (II) aufgebaut sind.

3. Zusammensetzungen gemäß Anspruch 2, **dadurch gekennzeichnet, dass** das Monomer der Formel (I) Dihydroxydiphenol und das Monomer der Formel (II) Bisphenol A darstellt.

4. Zusammensetzungen gemäß Anspruch 1, **dadurch gekennzeichnet, dass** (A) zu 91 bis 99 Gew.% und (B) zu 9 bis 1 Gew.% enthalten ist.

5. Zusammensetzungen gemäß Anspruch 1, **dadurch gekennzeichnet, dass** (B) ein mit Methylmethacrylat gepfropfter Butylacrylatkautschuk oder ein mit Methylmethacrylat gepropfter Silikon-Butylacrylat-Kompositkautschuk ist.

6. Zusammensetzungen gemäß Anspruch 1, **dadurch gekennzeichnet, dass** den Blends bis zu 10 Gew.% reines Bisphenol A Polycarbonat bezogen auf die erfindungsgemäßen Blends zugemischt wird.

7. Zusammensetzungen gemäß Anspruch 7, **dadurch gekennzeichnet, dass** als reines Bisphenol A Polycarbonat eines mit einem Mw von 31000 g mol-1 und etarel von 1,31 eingesetzt wird.

8. Verwendung der Zusammensetzungen gemäß Anspruch 1 zur Herstellung von Formkörpern und Extrudaten.

9. Formkörper und Extrudate aus Zusammensetzungen gemäß Anspruch 1.

## Claims

1. Compositions containing 89 to 99 wt.% of copolycarbonate (A), which is synthesised from 0.1 mole % to 46 mole %, preferably 11 mole % to 34 mole % and in particular 26 mole % to 34 mole % of compounds of the formula (I), 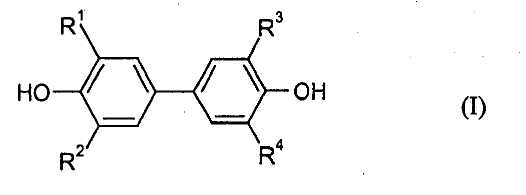 wherein R¹ to R⁴ independently of one another denote H, C₁-C₄ alkyl, phenyl, substituted phenyl or halogen, preferably H, C₁-C₄ alkyl or halogen and particularly preferably all denote the same radical, in particular H or tert.-butyl, and complementary amounts, in other words 99.9% mole % to 54 mole %, preferably 89 mole % to 66 mole % and in particular 74 mole % to 66 mole %, of compounds of the formula (II) 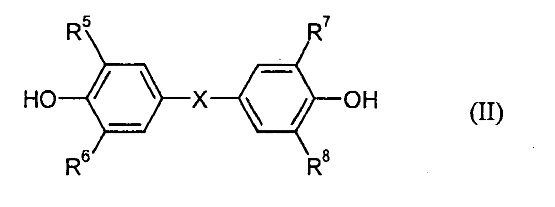 wherein R⁵ to R⁸ independently of one another denote H, CH₃, Cl or Br and X is C₁-C₅ alkylene, C₂-C₅ alkylidene, C₅-C₆ cycloalkylene, C₅-C₁₀ cycloalkylidene, as bisphenol monomers, and 11 to 1 wt.% of modifiers (B) selected from the group comprising polybutyl acrylate core-shell modifiers, polypropylene, poly(styrene-b-ethylene-cobutylene-b-styrene) modifiers, a butyl acrylate rubber grafted with methyl methacrylate, a silicone-butyl acrylate composite rubber grafted with methyl methacrylate or mixtures of two or more of these modifiers.

2. Compositions according to claim 1, **characterised in that** (A) is synthesised from 34 to 26 mole % of bisphenol monomer of the formula (I) and a complementary amount of bisphenol monomer of the formula (II).

3. Compositions according to claim 2, **characterised in that** the monomer of the formula (I) is dihydroxydiphenol and the monomer of the formula (II) is bisphenol A.

4. Compositions according to claim 1, **characterised in that** the content of (A) is 91 to 99 wt% and the content of (B) is 9 to 1 wt.%.

5. Compositions according to claim 1, **characterised in that** (B) is a butyl acrylate rubber grafted with methyl methacrylate or a silicone-butyl acrylate composite rubber grafted with methyl methacrylate.

6. Compositions according to claim 1, **characterised in that** up to 10 wt.% of pure bisphenol A polycarbonate referred to the blends according to the invention is mixed with the blends.

7. Compositions according to claim 6, **characterised in that** a polycarbonate having a M_{w} of 31,000 g mol⁻¹ and an eta rel of 1.31 is used as pure bisphenol A polycarbonate.

8. Use of the compositions according to claim 1 to produce moulded parts and extrudates.

9. Moulded parts and extrudates produced from compositions according to claim 1.

## Revendications

1. Compositions contenant 89 à 99% en poids de copolycarbonate (A), qui est élaboré à partir de 0,1% en moles à 46% en moles, de préférence de 11% en moles à 34% en moles, et en particulier, de 26% en moles à 34% en moles, de composés de la formule (I) 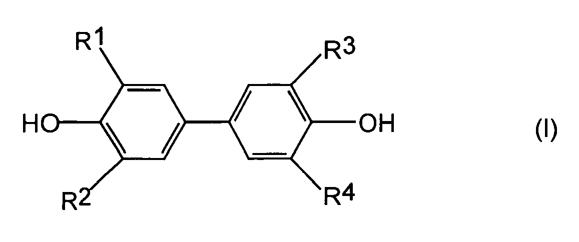 où R¹ à R⁴ représentent indépendamment l'un de l'autre, l'atome H, un radical alcoyle en C₁-C₄, phényle, phényle substitué ou un atome d'halogène, de préférence l'atome H, un radical alcoyle en C₁-C₄ ou un atome d'halogène, et de manière particulièrement préférée, ils représentent tous le même reste, en particulier l'atome H ou le radical t-butyle, et des quantités complémentairs, à savoir de 99,9% en moles à 54% en moles, de préférence de 89% en moles à 66% en moles, et en particulier, de 74% en moles à 66% en moles, de composés de la formule (II) 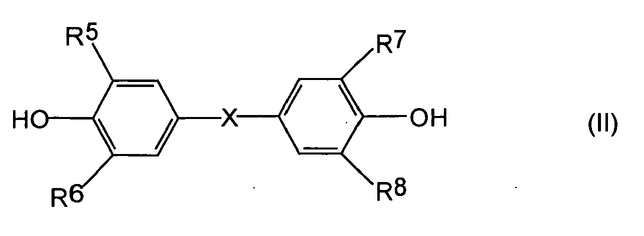 où R⁵-R⁸ représentent indépendamment l'un de l'autre, H, CH₃, Cl ou Br et X est un radical alcoylène en C₁-C₅, alcoylidène en C₁-C₅, cycloalcoylène en C₅-C₆, cycloalcoylidène en C₅-C₆, comme monomères bisphénol, et 11-1% en poids de modificateurs (B), choisis parmi le groupe des modificateurs enveloppe-coeur de poly(acrylate de butyle), le polypropylène, des modificateurs poly(styrène-b-éthylène-co-butylène-b-styrène), un caoutchouc acrylate de butyle greffé avec le méthacrylate de méthyle, ou un caoutchouc composite silicone-acrylate de butyle greffé avec le méthacrylate de méthyle ou des mélanges de deux ou plusieurs de ces modificateurs.

2. Compositions selon la revendication 1, **caractérisées en ce que** (A) est élaboré à partir de 34-26% en moles de monomères bisphénol de la formule (I), ainsi qu'une teneur complémentaire en monomères bisphénol de la formule (II).

3. Compositions selon la revendication 2, **caractérisées en ce que** le monomère de la formule (I) est le dihydroxydiphénol et le monomère de la formule (II) est le bisphénol A.

4. Compositions selon la revendication 1, **caractérisées en ce que** (A) est présent en une quantité allant de 91 à 99% en poids et (B) en une quantité allant de 9 à 1% en poids.

5. Compositions selon la revendication 1, **caractérisées en ce que** (B) est un caoutchouc acrylate de butyle greffé avec le méthacrylate de méthyle, ou un caoutchouc composite silicone-acrylate de butyle greffé avec le méthacrylate de méthyle.

6. Compositions selon la revendication 1, **caractérisées en ce que** l'on ajoute au mélange, jusqu'à 10% en poids de polycarbonate de bisphénol A pur, sur base du mélange suivant l'invention.

7. Compositions selon la revendication 6, **caractérisées en ce que** l'on met en oeuvre un polycarbonate de bisphénol A pur avec un Mw de 31 000 g/mole et un etarel (η_{rel.}) de 1,31.

8. Utilisation des compositions selon la revendication 1, pour la préparation de corps moulés et d'extrudats.

9. Corps moulés et extrudats des compositions selon la revendication 1.
